# EUROPEAN PATENT APPLICATION

(11) **EP 2 687 691 A1**
(43) Date of publication of application: **22.01.2014**
(21) Application number: 11861057.5
(22) Date of filing: 16.03.2011
(51) Int. Cl.: F01N 3/02, B03C 3/02, F01N 3/01, F01N 9/00, B03C 3/49, B03C 3/68, B03C 3/41

(54) **PARTICULATE-MATTER PROCESSING DEVICE**

(71) Applicant: TOYOTA JIDOSHA KABUSHIKI KAISHA, Toyota-shi, Aichi-ken, 471-8571 (JP)
(72) Inventor: MITANI, Shinichi, Toyota-shi, Aichi-ken, 471-8571 (JP); NOMURA, Hiroshi, Toyota-shi, Aichi-ken, 471-8571 (JP); MURASE, Eiji, Toyota-shi, Aichi-ken, 471-8571 (JP)
(74) Representative: Albutt, Anthony John
(86) International application number: PCT/JP2011/056296
(87) International publication number: WO 2012/124089

(57) **Abstract**

Aggregation of particulate matter is facilitated. Provision is made for an electrode arranged in an exhaust passage of an internal combustion engine, a power supply connected to the electrode for applying a voltage thereto, an air fuel ratio detection device to detect or estimate an air fuel ratio of an exhaust gas which flows through the exhaust passage, and an electric power control device to make electric power supplied to the electrode from the power supply larger in cases where the air fuel ratio detected or estimated by the air fuel ratio detection device is a rich air fuel ratio than in cases where it is a stoichiometric air fuel ratio or a lean air fuel ratio.

## Description

### [TECHNICAL FIELD]

The present invention relates to a particulate matter processing apparatus.

### [BACKGROUND ART]

There has been known a technique in which a discharge electrode is arranged in an exhaust passage of an internal combustion engine, and a corona discharge is caused to occur from the discharge electrode, whereby particulate matter (hereinafter also referred to as PM) is charged and condensed or aggregated (see, for example, a first patent document). By the condensation or aggregation of the particulate matter, the number of particles in the particulate matter can be decreased. In addition, the diameters or sizes of particles in the particulate matter become large, so when a filter is arranged at a downstream side, it becomes easy to trap the particulate matter with the filter.

However, electricity flows to the electrode through unburnt fuel such as HC, CO, etc., contained in an exhaust gas, too. In the past, no consideration has been given to an electric current passing to the electrode through this unburnt fuel. Then, when a large amount of unburnt fuel is contained in the exhaust gas, an electric current passes through the unburnt fuel, so that it becomes difficult for particulate matter to be charged or electrified, thus making it difficult for particulate matter to aggregate.

### [PRIOR ART REFERENCES]

### [PATENT DOCUMENTS]

[First Patent Document] Japanese patent application laid-open No. 2006-194116

### [SUMMARY OF THE INVENTION]

### [PROBLEMS TO BE SOLVED BY THE INVENTION]

The present invention has been made in view of the problem as referred to above, and has for its object to facilitate aggregation of particulate matter.

### [MEANS FOR SOLVING THE PROBLEMS]

In order to achieve the above-mentioned object, a particulate matter processing apparatus according to the present invention is provided with:
an electrode that is arranged in an exhaust passage of an internal combustion engine;
a power supply that is connected to said electrode and applies a voltage thereto;
an air fuel ratio detection device that detects or estimates an air fuel ratio of an exhaust gas which flows through said exhaust passage; and
an electric power control device that makes electric power supplied to said electrode from said power supply larger in cases where the air fuel ratio detected or estimated by said air fuel ratio detection device is a rich air fuel ratio than in cases where it is a stoichiometric air fuel ratio or a lean air fuel ratio.

Here, when the voltage is applied to the electrode, the particulate matter can be electrified or charged. The particulate matter thus charged is caused to move toward an inner wall of the exhaust passage by means of a Coulomb force or a flow of the exhaust gas. The particulate matter, which has reached the inner wall of the exhaust passage, releases electrons to the exhaust passage, so electricity flows to a ground side rather than to the electrode. Then, the particulate matter, which has released the electrons, aggregates with other particulate matter which exists nearby, so it is possible to decrease the number of particles.

In addition, when HC, CO, or the like, which is unburnt fuel, is contained in the exhaust gas, the unburnt fuel serves as a carrier, so when the voltage is applied to the electrode, an electric current passes to it through the unburnt fuel. Then, in cases where the air fuel ratio of the exhaust gas is a rich air fuel ratio, a lot of unburnt fuel is contained in the exhaust gas, so the electric current passing through the electrode becomes very large.

In this manner, when the electric current passes through the unburnt fuel such as HC, CO, etc., at the time when the air fuel ratio of the exhaust gas is a rich air fuel ratio, electrons for charging particulate matter decrease, so that it becomes difficult for the particulate matter to aggregate. In order to cope with this, in the case of a rich air fuel ratio, the electric power to be supplied is caused to increase. That is, electrons for charging the particulate matter are ensured by causing the electrons to be released which are more than those electrons which are consumed by the electric current passing through the unburnt fuel. In this manner, the electric power is supplied so that an amount of electric current equal to or more than the electric current passing through the unburnt fuel passes through the exhaust gas. As a result of this, the electric current passes through the particulate matter, so that the aggregation of the particulate matter can be facilitated.

Moreover, in the present invention, said power control device controls said electric power in a such manner that the lower the air fuel ratio detected or estimated by said air fuel ratio detection device, the larger becomes said electric power.

That is, the lower the air fuel ratio, the higher becomes the concentration of the unburnt fuel in the exhaust gas, so a larger electric current can pass therethrough. On the other hand, an amount of electric power necessary for the aggregation of particulate matter can be ensured by making the electric power supplied from the power supply to the electrode larger.

Further, in the present invention, provision is further made for an exhaust gas amount detection device that detects or estimates an amount of exhaust gas in the internal combustion engine,
wherein said power control device controls said electric power in a such manner that the more the amount of exhaust gas detected or estimated by said exhaust gas amount detection device, the larger becomes said electric power.

The amount of exhaust gas may be a mass of the exhaust gas flowing through the exhaust passage per unit time. The more the amount of exhaust gas, the more unburnt fuel passes through the surroundings of the electrode, so a larger electric current can pass therethrough. On the other hand, an amount of electric power necessary for the aggregation of particulate matter can be ensured by making the electric power supplied from the power supply to the electrode larger.

In the present invention, provision can be made for:
a processing part that is arranged in said exhaust passage with said electrode installed therein;
an insulation part that insulates electricity between said processing part and said exhaust passage;
a ground part that grounds said processing part;
a current detection device that detects an electric current in said ground part;
a determination device that determines whether a pulse current has been generated in the electric current detected by said detection device; and
a pulse current suppression device that increases the voltage to be applied to said electrode until when a determination is made by said determination device that a pulse current has been generated, and reduces the voltage to be applied to said electrode in cases where a determination has been made by said determination device that a pulse current has been generated, whereby the voltage to be applied to said electrode is adjusted to be lower than a voltage at which a pulse current is generated.

When the voltage to be applied to the electrode is made larger, more electrons will be released or emitted from the electrode. As a result of this, the condensation or aggregation of particulate matter can be facilitated, so the number of particles in the particulate matter can be decreased. However, when the voltage to be applied to the electrode is made too large, a strong electric discharge such as a corona discharge, an arc discharge, etc., can take place. When such a strong electric discharge takes place, particulate matter will be made finer or miniaturized by means of high speed electrons. Accordingly, it is not necessarily enough just to make the voltage to be applied larger.

For this reason, the voltage to be applied is set so that a strong electric discharge does not occur at the time of applying a voltage. Here, note that the particulate matter can be made to aggregate even if the voltage to be applied is such that a strong electric discharge such as a corona discharge, an arc discharge, etc., is not caused to occur. Here, in cases where an electric current is detected in the ground part, a pulse current is detected when a strong electric discharge has been generated in the electrode. That is, if a voltage is applied in such a manner as not to generate a pulse current, it is possible to suppress a strong electric discharge from being generated.

For example, the voltage to be applied is made to increase gradually, and when a pulse current occurs, the voltage to be applied is reduced. According to this, it is possible to suppress a strong electric discharge from being generated, thereby making it possible to suppress the particulate matter from being miniaturized.

In addition, by making the voltage to be applied larger within a range in which a pulse current is not generated, it becomes easier for the particulate matter to aggregate. That is, by increasing the voltage to be applied within the range in which a pulse current is not generated, it is possible to facilitate the aggregation of the particulate matter. For this reason, feedback control may be carried out so that the voltage to be applied becomes the largest within the range in which a pulse current is not generated.

Incidentally, the voltage to be applied at the time when a pulse current is generated becomes higher in cases where the air fuel ratio of the exhaust gas is a rich air fuel ratio than in cases where it is a stoichiometric air fuel ratio or a lean air fuel ratio. That is, an electric current passes through unburnt fuel, so a strong electric discharge becomes difficult to take place. For this reason, in the method in which the voltage to be applied is made to increase gradually until a pulse current occurs in cases where the air fuel ratio of the exhaust gas is a rich air fuel ratio, an amount of increase of the voltage to be applied until a pulse current is detected becomes large, and a period of time until a pulse current is detected becomes long. During this period of time, the voltage to be applied is low, so the aggregation of the particulate matter is not enough. In contrast to this, the power control device makes relatively large the electric power to be supplied in the case of a rich air fuel ratio, an initial value of the voltage to be applied at the time of making the voltage to be applied increase gradually becomes large. For this reason, the increased amount of the voltage to be applied until a pulse current occurs can be made small, thereby making it possible to shorten the period of time until a pulse current occurs. As a result of this, the aggregation of the particulate matter can be further facilitated.

Here, note that the current detection device detects an electric current at an electric potential reference point side from the electrode. In general, wiring is made often longer or thicker at a power supply side from the electrode than at a ground side from the electrode. In addition, electric charge may be stored at the power supply side from the electrode. In that case, for example, in cases where an electric current is detected in the power supply side from the electrode, even if a strong discharge is generated in the electrode, the rising and falling of the electric current detected by the current detection device at that time become slow. For this reason, it may be difficult to detect a pulse current.

On the other hand, in the ground side from the electrode, wiring can be made relatively short and thin. For this reason, in cases where an electric current is detected in the ground side from the electrode, a pulse current tends to be detected when a strong electric discharge has been generated. Accordingly, by detecting an electric current in the ground side from the electrode, it is possible to detect the occurrence of a strong electric discharge in a more accurate manner.

Moreover, due to the provision of the insulation part, it is possible to suppress electricity from flowing to other than the ground part. For this reason, it is possible to detect a pulse current in a more accurate manner when a strong electric discharge is generated.

### [EFFECT OF THE INVENTION]

According to the present invention, it is possible to facilitate the aggregation of particulate matter.

### [BRIEF DESCRIPTION OF THE DRAWINGS]

[Fig. 1] is a view showing the schematic construction of a particulate matter processing apparatus according to an embodiment of the present invention.
[Fig. 2] is a flow chart showing a flow for controlling a voltage to be applied according to the embodiment.

### [MODE FOR CARRYING OUT THE INVENTION]

Hereinafter, reference will be made to a specific embodiment of a particulate matter processing apparatus according to the present invention based on the attached drawings.

### (First Embodiment)

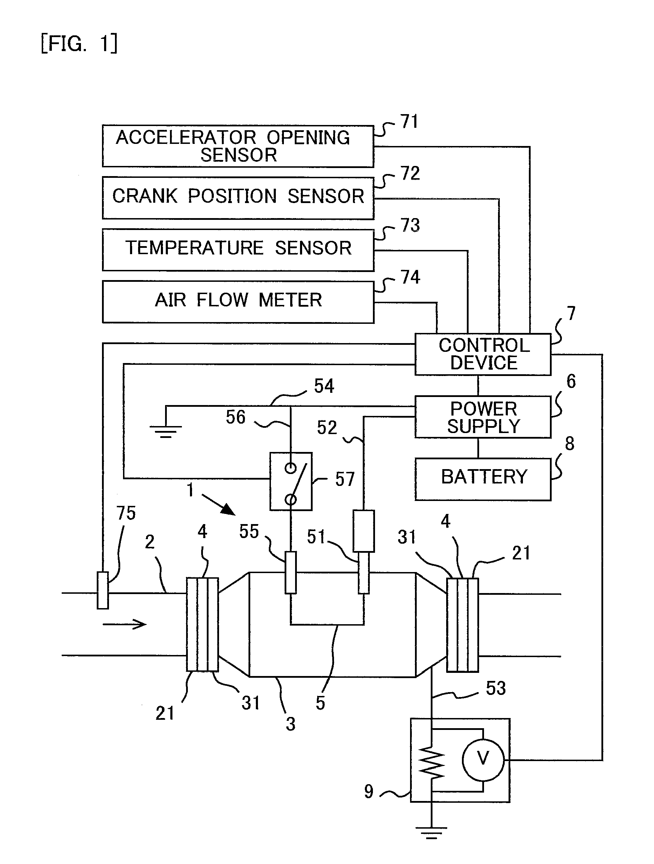

Fig. 1 is a view showing the schematic construction of a particulate matter processing apparatus 1 according to this first embodiment of the present invention. The particulate matter processing apparatus 1 is arranged in an exhaust passage 2 of a gasoline engine.

The particulate matter processing apparatus 1 is constructed to be provided with a housing 3 which is connected at its opposite ends with the exhaust passage 2. As a material for the housing 3, there is used a stainless steel material. The housing 3 is formed into a hollow cylindrical shape with its diameter being larger than that of the exhaust passage 2. The opposite end portions of the housing 3 are each formed into a tapered shape of which the cross-sectional area becomes smaller as they become closer to their end. Here, note that in Fig. 1, an exhaust gas flows through the exhaust passage 2 in the direction of an arrow, and flows into the interior of the housing 3. For this reason, the housing 3 may also be a part of the exhaust passage 2.

The exhaust passage 2 and the housing 3 are connected to each other through insulation parts 4. The insulation parts 4 are each made of an electrically insulating material. The insulation parts 4 are each sandwiched between a flange 21, which is formed at an end of the exhaust passage 2, and a flange 31, which is formed at one adjacent end of the housing 3. The exhaust passage 2 and the housing 3 are fastened to each other, for example, by means of bolts and nuts. Then, these bolts and nuts are also subjected to insulation processing so as to prevent electricity from flowing through these bolts and nuts. In this manner, electricity is prevented from flowing between the exhaust passage 2 and the housing 3.

An electrode 5 is mounted on the housing 3. The electrode 5 penetrates through a side surface of the housing 3, extends from the side surface of the housing 3 in the direction of a central axis thereof, is then bent to an upstream side of the flow of the exhaust gas in the vicinity of the central axis, and extends toward the upstream side of the flow of the exhaust gas in parallel to the central axis. Then, the electrode 5 further bends to a side surface side of the housing 3 at its upstream side, and leads to the outside while penetrating through the side surface of the housing 3.

In addition, the electrode 5 is provided with insulator parts 51, 55 each made of an electrically insulating material, which serve to prevent electricity from flowing between the electrode 5 and the housing 3. These insulator parts 51, 55 are located between the electrode 5 and the housing 3, and have a function of insulating electricity and at the same time fixedly securing the electrode 5 to the housing 3.

Then, the electrode 5 has its one end connected to a power supply 6 through a power supply side electric wire 52. The power supply 6 can supply electricity to the electrode 5 and at the same time change a voltage to be applied thereto. This power supply 6 is connected to a control device 7 and a battery 8 through electric wires, respectively. The control device 7 controls the voltage which is applied to the electrode 5 or electric power to be supplied to the electrode 5 by the power supply 6. In addition, a ground electric wire 54 for connecting the power supply 6 to a reference point of electric potential is connected to the power supply 6. The power supply 6 is connected to ground through this ground electric wire 54.

In addition, the electrode 5 has its other end connected to the ground electric wire 54 through a short circuit electric wire 56. In the middle of the short circuit electric wire 56, a switch 57 for opening and closing an electric circuit is provided or inserted. An electric current flows through the short circuit electric wire 56 by turning on the switch 57 during the application of the voltage by the power supply 6. At this time, the electrode 5 is placed in a short-circuited state, so the temperature of the electrode 5 goes up. Here, note that in this embodiment, the power supply side electric wire 52 is connected to the downstream side insulator part 51 and the short circuit electric wire 56 is connected to the upstream side insulator part 55, but instead of this, the short circuit electric wire 56 may be connected to the downstream side insulator part 51, and the power supply side electric wire 52 may be connected to the upstream side insulator part 55.

Also, a ground side electric wire 53 is connected to the housing 3, so that the housing 3 is connected to ground through the ground side electric wire 53. A detection device 9, which serves to detect the electric current passing through the ground side electric wire 53, is provided or connected to the ground side electric wire 53. The detection device 9 detects the electric current, for example, by measuring a potential difference between opposite ends of a resistor which is provided or inserted in the middle of the ground side electric wire 53. This detection device 9 is connected to the control device 7 through an electric wire. Then, the electric current detected by the detection device 9 is inputted to the control device 7. Here, note that, the ground side electric wire 53 is smaller in electric capacity than the power supply side electric wire 52, so a response at the time of detecting an electric current is higher when the detection device 9 is provided or connected to the ground side electric wire 53 than when the detection device 9 is provided or connected to the power supply side electric wire 52. And, in this embodiment, the detection device 9 corresponds to a current detection device in the present invention.

In addition, an accelerator opening sensor 71, a crank position sensor 72, a temperature sensor 73, an air flow meter 74, and an air fuel ratio sensor 75 are connected to the control device 7. The accelerator opening sensor 71 detects an engine load by outputting an electric signal corresponding to an amount of depression of an accelerator pedal at which the driver of a vehicle with the internal combustion engine installed thereon has depressed or stepped down the accelerator pedal. The crank position sensor 72 detects the number of engine revolutions per unit time. The temperature sensor 73 detects the temperature of the internal combustion engine by detecting the temperature of cooling water or the temperature of lubricating oil in the internal combustion engine. The air flow meter 74 detects an amount of intake air sucked into the internal combustion engine. The air fuel ratio sensor 75 is mounted on the exhaust passage 2 at a location upstream of the housing 3, and detects an air fuel ratio of the exhaust gas which flows through the exhaust passage 2. Here, note that in this embodiment, the air fuel ratio sensor 75 corresponds to an air fuel ratio detection device in the present invention. In addition, the air fuel ratio of the exhaust gas may be estimated from an operating state of the internal combustion engine.

Moreover, the switch 57 is connected to the control device 7 through an electric wire, so that the control device 7 can perform an ON-OFF operation of the switch 57. Here, by turning the switch into an ON state during the time when a voltage is applied to the electrode 5 from the power supply 6, an electric current passes through the short circuit electric wire 56. On the other hand, by turning the switch into an OFF state, the electric current passing through the short circuit electric wire 56 is put into a stopped or interrupted state.

In the particulate matter processing apparatus 1 as constructed in this manner, electrons are released from the electrode 5 by applying a negative high direct current voltage from the power supply 6 to the electrode 5 when the switch 57 is in the OFF state. That is, electrons are caused to be released from the electrode 5 by making the electric potential of the electrode 5 lower than that of the housing 3. Then, particulate matter in the exhaust gas can be charged to a negative polarity by means of these electrons. The particulate matter thus charged to a negative polarity is caused to move by means of a Coulomb force and a gas stream of the exhaust gas. Thereafter, when the particulate matter reaches the housing 3, the electrons, which have charged the particulate matter to a negative polarity, are released to the housing 3. The particulate matter, which has released the electrons to the housing 3, aggregates to become larger in the particle diameter or size of each particle. In addition, the number of particles in the particulate matter is reduced due to the aggregation of the particulate matter. That is, by applying the voltage to the electrode 5, the diameters or sizes of particles in the particulate matter can be made larger, and the number of particles in the particulate matter can be made to reduce.

In addition, when a voltage is applied from the power supply 6 to the electrode 5 by turning on the switch 57, the electrode 5 is placed in a short-circuited state, whereby the temperature of the electrode 5 goes up. As a result of this, substances such as particulate matter, water, and the like, adhered to the electrode 5, can be removed by being oxidized or evaporated.

Incidentally, if unburnt fuel such as HC, CO, etc., is contained in the exhaust gas, upon application of a voltage to the electrode 5, the unburnt fuel will serve as a carrier for electrons, so that an ionic current will flow. Then, when the air fuel ratio of the exhaust gas becomes a rich air fuel ratio, the amount of the unburnt fuel in the exhaust gas will increase, and the ionic current will increase. As a result, the electric current to be detected will become larger. Then, the ionic current due to the unburnt fuel is by far larger than the electric current which passes through particulate matter when the particulate matter is aggregated.

Then, when electricity flows through the unburnt fuel, it will become difficult for electricity to flow through the particulate matter. That is, the electrons for charging the particulate matter run short, so the particulate matter becomes difficult to be charged. In that case, it becomes difficult to cause the particulate matter to aggregate.

Accordingly, in this embodiment, in cases where the air fuel ratio of the exhaust gas is a rich air fuel ratio, the electric power supplied from the power supply 6 to the electrode 5 is caused to increase. If the electric power is increased in this manner, it will be possible to ensure the electrons which are required in order to charge the particulate matter. As a result of this, it will be possible to facilitate the aggregation of the particulate matter.

On the other hand, in cases where the air fuel ratio of the exhaust gas is a stoichiometric air fuel ratio or a lean air fuel ratio, a target value of a voltage to be applied is calculated, and the voltage is applied in such a manner that it becomes the target value of the voltage to be applied. At this time, almost no unburnt fuel is contained in the exhaust gas, so an electric current corresponding to the number of particles of particulate matter in the exhaust gas passes through the electrode 5. Here, note that in cases where the air fuel ratio of the exhaust gas is the stoichiometric air fuel ratio or a lean air fuel ratio, an upper limit may be set for the electric power to be supplied. This upper limit is smaller than an amount of electric power which is set at the time of a rich air fuel ratio.

Here, note that the electric power to be supplied at the time when the air fuel ratio of the exhaust gas is a rich air fuel ratio can be set to a predetermined value which has beforehand been calculated through experiments, etc. In addition, the lower the air fuel ratio of the exhaust gas, the higher becomes the concentration of the unburnt fuel, so the larger becomes the electric current. As a result, the lower the air fuel ratio of the exhaust gas, the larger an amount of increase of the electric power may be made, so that the electric current can be more increased.

Moreover, the more an amount of exhaust gas (which may also be a flow rate of exhaust gas) in the internal combustion engine, the more the unburnt fuel which passes through the housing 3 increases, so the more amount of electric current can pass. Accordingly, the larger the amount of exhaust gas, the larger the amount of increase of the electric power may be made, so that the electric current can be more increased.

However, when a negative voltage to be applied to the electrode 5 is made larger, more electrons will be released or emitted from the electrode 5. As a result of this, the condensation or aggregation of particulate matter can be facilitated, so the number of particles in the particulate matter can be more decreased. However, when the voltage to be applied to the electrode 5 is made too large, a strong electric discharge such as a corona discharge, an arc discharge, etc., can take place. When such a strong electric discharge takes place, particulate matter will be made finer or miniaturized by means of high speed electrons. Accordingly, in order to facilitate the aggregation of particulate matter, it is preferable to adjust the voltage to be applied to a voltage lower than that at which a strong electric discharge such as a corona discharge, etc., takes place. Here, when a strong electric discharge such as a corona discharge, etc., occurs, a pulse current is detected by means of the detection device 9.

Accordingly, in this embodiment, the voltage to be applied is adjusted to a range in which a pulse current is not generated. That is, a voltage smaller than the voltage to be applied at which a pulse current is generated is applied to the electrode 5. This suppresses the pulse current from being generated, and also suppresses the number of particles in particulate matter from being increased. For this reason, a voltage to be applied at which a pulse current begins to be generated is detected by increasing the voltage to be applied until the pulse current is generated. Here, note that before a pulse current is generated, the voltage to be applied at which a pulse current is generated may be detected by reading from the electric current a sign that a pulse current will be generated. The voltage to be applied being detected in this manner is hereinafter called a "pulse current generation voltage". This pulse current generation voltage may also be a voltage to be applied which becomes a boundary or threshold as to whether or not a pulse current is generated.

The pulse current generation voltage is larger in the case of the air fuel ratio of the exhaust gas being a rich air fuel ratio than in the case of the air fuel ratio of the exhaust gas being the stoichiometric air fuel ratio or a lean air fuel ratio. That is, in the case of a rich air fuel ratio, the electric current becomes larger under the influence of the ionic current generated by unburnt fuel, so the voltage to be applied also becomes larger. However, there will be no change in the fact that when the voltage to be applied becomes too large, a strong electric discharge will be generated so that a pulse current will be detected.

Here, note that in this embodiment, due to the provision of the insulation parts 4, it is suppressed that electricity passes to the exhaust passage 2. Accordingly, an electric current, which passes to the housing 3 through deposits on the electrode 5, particulate matter afloat in the exhaust gas, and unburnt fuel, is detected by the detection device 9. In addition, the detection accuracy of the electric current can be enhanced by detecting the electric current in the ground side electric wire 53. In general, the power supply side electric wire 52 is often longer in wiring length or thicker in wiring diameter than the ground side electric wire 53. Then, if an electric current is detected in the power supply side electric wire 52, the rising and falling of the detected electric current become slower than an actual change of the electric current. For this reason, there is a fear that the detection accuracy of a pulse electric current may become low.

On the other hand, in the ground side electric wire 53, wiring can be made relatively short and thin. For this reason, the response to an actual change of electric current is higher when the electric current is detected in the ground side electric wire 53. Accordingly, by detecting the electric current in the ground side electric wire 53, it is possible to detect a pulse current in a more accurate manner.

Here, note that in this embodiment, a catalyst for oxidizing unburnt fuel may be provided or arranged at the upstream side of the housing 3. Then, when the catalyst is in an activated state, an amount of unburnt fuel which flows into the housing 3 can be decreased. According to this, it is possible to suppress an excessively large current from flowing to the electrode 5.

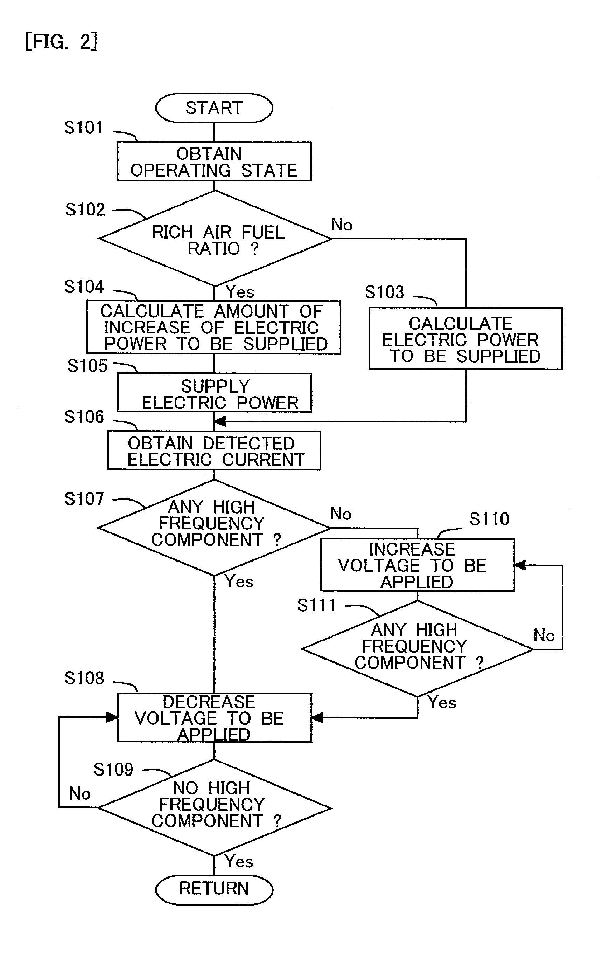

Next, Fig. 2 is a flow chart showing a flow or routine for controlling the voltage to be applied according to this embodiment. This routine is carried out by means of the control device 7 in a repeated manner at each predetermined time interval.

In step S101, the operating state of the internal combustion engine is obtained. For example, the values to be needed for hereafter or subsequent processing, such as the number of engine revolutions per unit time, the engine load, the air fuel ratio of the exhaust gas, and so on, are read in. The number of engine revolutions per unit time is detected by the crank position sensor 72, and the engine load is detected by the accelerator opening sensor 71. In addition, the air fuel ratio of the exhaust gas is detected by the air fuel ratio sensor 75. Here, note that the air fuel ratio of the exhaust gas can also be estimated from the number of engine revolutions per unit time, the engine load, the temperature of the internal combustion engine, and so on. Also, the temperature of the internal combustion engine (e.g., the temperature of lubricating oil or the temperature of cooling water) is detected by the temperature sensor 73.

Further, the amount of exhaust gas in the internal combustion engine is obtained. The amount of exhaust gas in the internal combustion engine has a correlation with the amount of intake air in the internal combustion engine, and hence, can be obtained based on the amount of intake air detected by the air flow meter 74. In addition, the amount of exhaust gas may be estimated from the number of engine revolutions per unit time and the engine load. Or a sensor for detecting the amount of exhaust gas may be provided in the exhaust passage 2. Thus, the control device 7, which calculates the amount of exhaust gas in the internal combustion engine in this manner, corresponds to an exhaust gas amount detection device in the present invention.

In step S102, it is determined whether the air fuel ratio of the exhaust gas obtained in step S101 is a rich air fuel ratio. In this step, it is determined whether a lot of unburnt fuel is contained in the exhaust gas.

Then, in cases where a negative determination is made in step S102, the routine goes to step S103.

In step S102, the voltage to be applied to the electrode 5 is calculated. In this step, an initial value of the voltage to be applied in the case of the air fuel ratio of the exhaust gas being the stoichiometric air fuel ratio or a lean air fuel ratio is calculated, and this voltage is applied. In cases where the air fuel ratio of the exhaust gas is the stoichiometric air fuel ratio or a lean air fuel ratio, the voltage to be applied is set according to the number of particles in the particulate matter (particles / cm³) to be estimated. This number of particles in the particulate matter is the number of particles in the particulate matter which are discharged from the internal combustion engine, and is the number of particles in the particulate matter before the particulate matter flows into the housing 3. The number of particles in the particulate matter has a correlation with the number of engine revolutions per unit time, the engine load, and the temperature of the internal combustion engine (e.g., the temperature of lubricating oil or the temperature of cooling water), and hence is calculated based on these values. A plurality of maps used for calculating the number of particles in the particulate matter from the number of engine revolutions per unit time and the engine load may be stored according to the temperature of the internal combustion engine, so that the number of particles in the particulate matter may be calculated based on these maps.

Here, note that a sensor for detecting the number of particles in the particulate matter may be mounted on the exhaust passage 2 at a location upstream of the housing 3, so that the number of particles in the particulate matter is detected by this sensor.

Then, the voltage to be applied is calculated based on the number of particles in the particulate matter and the amount of exhaust gas (g/sec) in the internal combustion engine. Such a relation may have beforehand been obtained through experiments, etc., and made into a map.

Here, the smaller the amount of exhaust gas, the smaller the inertia force of the particulate matter becomes, and hence, the influence of an electrostatic action becomes relatively larger. For this reason, it becomes easy for the particulate matter to aggregate. Accordingly, the smaller the amount of exhaust gas, with the smaller voltage to be applied, the particulate matter aggregates. For this reason, the smaller the amount of exhaust gas, the smaller the voltage to be applied is made. In addition, the more the number of particles in the particulate matter, the shorter become the distances between adjacent particles in the particulate matter, and hence, the influence of the electrostatic action becomes relatively larger. For this reason, the more the number of particles in the particulate matter, with the smaller voltage to be applied, the particulate matter aggregates. As a result, the more the number of particles in the particulate matter, the smaller the voltage to be applied is made.

In addition, the voltage to be applied may also be, for example, such a value at which the reduction or decrease rate of the number of particles in the particulate matter becomes a predetermined value (e.g., 40 %). Further, the voltage to be applied may also be a specified value which has been set beforehand. Then, after the voltage to be applied has been calculated, this voltage is applied, and the routine goes to step S106.

On the other hand, in cases where a positive determination is made in step S102, the routine advances to step S104.

In step S104, an amount of increase of the electric power supplied to the electrode 5 from the power supply 6 is calculated. That is, in cases where the air fuel ratio of the exhaust gas is a rich air fuel ratio, an amount of electric power to be supplied is made larger than an amount of electric power corresponding to the voltage to be applied calculated in step S103. The amount of increase of the electric power is calculated based on the air fuel ratio of the exhaust gas and the amount of exhaust gas in the internal combustion engine obtained in step S101. The amount of increase of the electric power has been mapped in advance in such a manner that it becomes larger in accordance with the lower air fuel ratio of the exhaust gas, and also becomes larger in accordance with the larger amount of exhaust gas in the internal combustion engine, and then has been stored in the control device 7. The relations therebetween have beforehand been obtained through experiments, etc.

Then, in step S105, electric power is supplied according to the amount of increase of the electric power calculated in step S104. Here, note that in this embodiment, the control device 7, which carries out the processing of step S104 and step S105, corresponds to a power control device in the present invention.

Thereafter, in step S106, an electric current is detected. This electric current is a value which is detected by the detection device 9.

Subsequently, in step S107, it is determined whether there exists a high frequency component of the electric current. A pulse current can be extracted as a high frequency component of the electric current. Accordingly, a high frequency component is extracted by causing the electric current detected by the detection device 9 to pass through a high pass filter. Then, in cases where a high frequency component has been extracted by the passage of the electric current through the high pass filter, a determination is made that there exists a high frequency component.

Here, note that the determination as to whether there exists a high frequency component in electric current can also be made based on whether a standard deviation of the electric current is larger than a predetermined value. It is determined whether the standard deviation thus calculated is larger than the predetermined value, and if so, a determination is made hat there exists a high frequency component. The predetermined value is a fixed value for determining the presence or absence of a high frequency component, and has beforehand been calculated through experiments, etc. In addition, for example, in cases where the rate of rise of the detected electric current is equal to or larger than a threshold value, and in cases where the amount of rise is equal to or larger than a threshold value, a determination can also be made that there exists a high frequency component. Here, note that in this embodiment, the control device 7, which carries out the processing of step S107, corresponds to a determination device in the present invention. Then, in cases where an affirmative determination is made in step S107, the routine goes to step S108.

In step S108, the voltage to be applied is decreased so as to suppress the occurrence of a pulse current. An optimum value for an amount at which the voltage to be applied is decreased may have beforehand been obtained through experiments, etc. Here, note that in this embodiment, the control device 7, which carries out the processing of step S108, corresponds to a pulse current suppression device in the present invention.

Then, in step S109, it is determined whether there does not exist a high frequency component. That is, it is determined whether a pulse current is no longer generated due to the decrease of the voltage to be applied. This determination is carried out as in step S107. In cases where an affirmative determination is made in step S109, this routine is ended. On the other hand, in cases where a negative determination is made in step S109, a return is made to step S108, and the voltage to be applied is decreased again. In this manner, the voltage to be applied is decreased until a pulse current is not generated. Then, the voltage to be applied when an affirmative determination is made in step S109 becomes the pulse current generation voltage.

On the other hand, in cases where a negative determination is made in step S107, the routine advances to step S110.

In step S110, the voltage to be applied is increased. As a result of this, the aggregation of particulate matter is facilitated. An optimum value for an amount at which the voltage to be applied is increased may have beforehand been obtained through experiments, etc.

Then, in step S111, it is determined whether there exists a high frequency component. That is, it is determined whether a pulse current has been generated due to the increase of the voltage to be applied. This determination is carried out as in step S107. In cases where an affirmative determination is made in step S111, the routine goes to step S108 in order to suppress the occurrence of a pulse current. On the other hand, in cases where a negative determination is made in step S111, a return is made to step S110, and the voltage to be applied is increased again. In this manner, the voltage to be applied is increased until a pulse current is generated.

In this manner, by carrying out the feedback control of the voltage to be applied, the pulse current generation voltage can be detected, and at the same time, the voltage to be applied can be made as high as possible within a range in which a pulse current is not generated.

As described above, at the time of a rich air fuel ratio, the electric power to be supplied is increased, so that a sufficient number of electrons are made to be released in order to cause particulate matter to aggregate. As a result of this, it is possible to facilitate the aggregation of the particulate matter. In addition, the voltage to be applied is made larger, while suppressing a strong electric discharge from occurring, whereby the aggregation of the particulate matter can also be facilitated. Moreover, in cases where the air fuel ratio of the exhaust gas is a rich air fuel ratio, the pulse current generation voltage becomes large, but by increasing the electric power to be supplied at this time, it is possible to increase the voltage to be applied in a quick manner, thus making it possible to detect the pulse current generation voltage in a quick manner. As a result of this, it is possible to facilitate the aggregation of the particulate matter.

### [EXPLANATION OF REFERENCE NUMERALS AND CHARACTERS]

1 particulate matter processing apparatus
2 exhaust passage
3 housing
4 insulation parts
5 electrode
6 power supply
7 control device
8 battery
9 detection device
21 flange
31 flange
51 insulator part
52 power supply side electric wire
53 ground side electric wire
54 ground electric wire
55 insulator part
56 short circuit electric wire
57 switch
71 accelerator opening sensor
72 crank position sensor
73 temperature sensor
74 air flow meter
75 air fuel ratio sensor

## Claims

1. A particulate matter processing apparatus comprising:
an electrode that is arranged in an exhaust passage of an internal combustion engine;
a power supply that is connected to said electrode and applies a voltage thereto;
an air fuel ratio detection device that detects or estimates an air fuel ratio of an exhaust gas which flows through said exhaust passage; and
an electric power control device that makes electric power supplied to said electrode from said power supply larger in cases where the air fuel ratio detected or estimated by said air fuel ratio detection device is a rich air fuel ratio than in cases where it is a stoichiometric air fuel ratio or a lean air fuel ratio.

2. The particulate matter processing apparatus as set forth in claim 1, wherein said power control device controls said electric power in a such manner that the lower the air fuel ratio detected or estimated by said air fuel ratio detection device, the larger becomes said electric power.

3. The particulate matter processing apparatus as set forth in claim 1 or 2, further comprising:
an exhaust gas amount detection device that detects or estimates an amount of exhaust gas of the internal combustion engine;
wherein said power control device controls said electric power in a such manner that the more the amount of exhaust gas detected or estimated by said exhaust gas amount detection device, the larger becomes said electric power.

4. The particulate matter processing apparatus as set forth in any one of claims 1 through 3, further comprising:
a processing part that is arranged in said exhaust passage with said electrode installed therein;
an insulation part that insulates electricity between said processing part and said exhaust passage;
a ground part that grounds said processing part; and
a current detection device that detects an electric current in said ground part.
a determination device that determines whether a pulse current has been generated in the electric current detected by said detection device; and
a pulse current suppression device that increases a voltage to be applied to said electrode until when a determination is made by said determination device that a pulse current has been generated, and reduces the voltage to be applied to said electrode in cases where a determination has been made by said determination device that a pulse current has been generated, whereby the voltage to be applied to said electrode is adjusted to be lower than a voltage at which a pulse current is generated.
